(19) Europäisches Patentamt
European Patent Office
Office européen des brevets

(11) Veröffentlichungsnummer : **0 080 149**
**B1**

(12) # EUROPÄISCHE PATENTSCHRIFT

(45) Veröffentlichungstag der Patentschrift : **09.01.85**

(51) Int. Cl.⁴ : **C 07 F 9/48**

(21) Anmeldenummer : **82110561.6**

(22) Anmeldetag : **16.11.82**

(54) **Verfahren zur Herstellung phosphoniger Säuren.**

(30) Priorität : **21.11.81 DE 3146196**

(43) Veröffentlichungstag der Anmeldung : **01.06.83 Patentblatt 83/22**

(45) Bekanntmachung des Hinweises auf die Patenterteilung : **09.01.85 Patentblatt 85/02**

(84) Benannte Vertragsstaaten : **BE CH DE FR GB IT LI NL**

(56) Entgegenhaltungen :
**US-A- 2 605 280**
**Chemical Abstracts Band 92, Nr. 7, 18. Februar 1980, N.A. ANDREEV et al. "Synthesis and some properties of dialkylamidoalkyl-, cycloalkyl-, and arylphosphonous acid esters", Seite 687, linke Spalte, Abstract Nr. 58894k**

(73) Patentinhaber : **HOECHST AKTIENGESELLSCHAFT**
**Postfach 80 03 20**
**D-6230 Frankfurt am Main 80 (DE)**

(72) Erfinder : **Kleiner, Hans-Jerg, Dr.**
**Altkönigstrasse 11a**
**D-6242 Kronberg/Taunus (DE)**
Erfinder : **Neumaier, Hubert, Dr.**
**Breslauer Strasse 76**
**D-5040 Brühl (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 080 149 B1

**Beschreibung**

Phosphonige Säuren sind Verbindungen der allgemeinen Formel

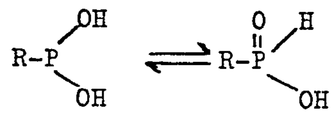

worin R = organischer Rest.

Sie sind teils Zwischen-, teils Endprodukte auf verschiedenen Sachgebieten. Zwischenprodukte sind die phosphonigen Säuren z. B. auf dem Flammschutz- und Pflanzenschutzsektor, Endprodukte z. B. auf dem Gebiet der Stabilisatoren und Antistatika. Benzolphosphonige Säure und deren Salze sind beispielsweise wertvolle Stabilisatoren für Polyamide etc.

Die Herstellung der phosphonigen Säuren kann u. a. durch Hydrolyse von Dihalogenphosphanen gemäß der nachstehenden Reaktionsgleichung erfolgen [Houben-Weyl, Methoden der organischen Chemie, Bd. XII/1 (1963), S. 294] :

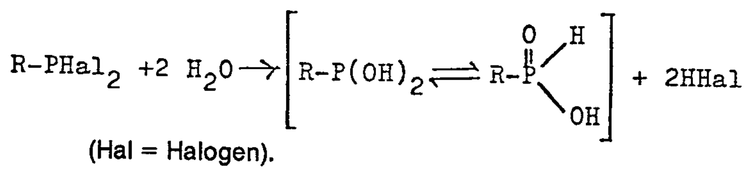

(Hal = Halogen).

Nach der gennanten Literaturstelle muß dabei bei möglichst schonenden Bedingungen — d. h. bei Raum- oder nur wenig darüber erhöhter Temperatur — gearbeitet werden, weil die bei der Reaktion entstehenden phosphonigen Säuren bei höheren Temperaturen in die entsprechenden Phosphonsäuren sowie die — überliechenden und giftigen und daher außerordentlich unerwünschten — primären Phosphane disproportionieren sollen ; der Disproportionierung liegt die folgende Reaktionsgleichung zugrunde :

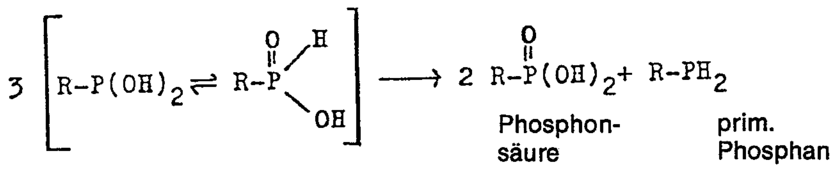


In dem aus der vorerwähnten Literaturstelle ersichtlichen Beispiel zur Herstellung von Chlormethan-phosphoniger Säure durch Hydrolyse von Chlormethyl-dichlorphosphan (Eintropfen des Chlormethyldichlorphosphans in konzentrierte Salzsäure) ist die Reaktionstemperatur zu 20-30 °C angegeben, wobei noch kurze Zeit bei 50 °C nachgerührt wird. Nach der anschließenden Abdestillation von Wasser und Salzsäure im Vakuum, am Ende bei 90 °C unter 1-2 Torr, sollen 99 % d. Th. an Chlormethan-phosphoniger Säure verbleiben.

Über eine etwaige Bildung von Phosphonsäure und Phosphan (durch Disproportionierung der Chlormethan-phosphonigen Säure) ist in dem Beispiel nichts ausgesagt.

Nichts ausgesagt über eine etwaige Bildung von Phosphonsäure und Phosphan ist auch in der US-A-2 605 280 bei der dort — allerdings ohne irgendwelche Details — erwähnten Hydrolyse von p-Bromphenyl- und p-Chlorphenyl-dichlorphosphan zu der entsprechenden p-Bromphenyl- bzw. p-Chlorphenyl-phosphonigen Säure mit warmem Wasser.

Daß auch bei den üblichen niedrigen Reaktionstemperaturen der Hydrolyse von Dihalogenphosphan zu den entsprechenden phosphonigen Säuren die Disproportionierung der letzteren nicht, bzw. nicht ganz ausbleibt, geht aber z. B. hervor aus dem Artikel von G. M. Kosolapoff und J. S. Powell in J. Am. Soc. *72* (1950), S. 4291. Im experimentellen Teil dieses Artikels wird von einem Versuch der « conventional hydrolysis » von Phenyldichlorphosphan — also der Hydrolyse des Phenylchlorphosphans wohl unter Raum- oder nur wenig darüber erhöhter Temperatur — und dem dabei auftretenden außerordentlich üblen Geruch des Phenylphosphans berichtet ; ein Ergebnis, das auch durch eigene Versuche voll bestätigt werden konnte. Wegen der ansonsten aber nicht unwirtschaftlichen Hydrolyse der Dihalogenphosphane zu den entsprechenden phosphonigen Säuren war es wünschenwert und bestand die Aufgabe, diese Reaktion noch so zu verbessern, daß dabei auch keine Disproportionierung der phosphonigen Säuren mehr auftritt.

Diese Aufgabe konnte erfindungsgemäß durch die Anwendung einer höheren als der bisher üblichen Reaktionstemperatur gelöst werden.

Erfindungsgegenstand ist daher ein Verfahren zur Herstellung phosphoniger Säuren durch Hydrolyse von Dichlorphosphanen mit Wasser ;

das Verfahren ist dadurch gekennzeichnet, daß man Dichlorphosphane der Formel

$$R{-}PCl_2,$$

in welcher R $C_1$-$C_{18}$-, insbesondere $C_1$-$C_4$-Alkyl, $C_7$-$C_{12}$-Aralkyl, insbesondere Benzyl, oder $C_6$-$C_{10}$-Aryl, insbesondere Phenyl bedeutet bei Temperaturen von 60 bis 100 °C, vorzugsweise von 80 bis 95 °C hydrolysiert.

Es ist außerordentlich überraschend, daß in diesem Temperaturbereich die Disproportionierung der phosphonigen Säuren vollständig oder jedenfalls praktisch vollständig ausbleibt, da man nach Houben-Weyl a. a. O. hier gerade eine verstärkte Disproportionierung erwarten mußte.

Die Ausgangs-Dichlorphosphane können auf bekannte Weise erhalten werden, z. B. durch Umsetzung von Alkanen, bevorzugt Methan, oder von Benzol mit Phosphortrichlorid bei etwa 600 °C (DE-OS 20 46 314, DE-PS 26 29 299) oder Umsetzung von Chlorbenzol mit Phosphortrichlorid und Phosphor bei 300-350 °C (DE-OS 24 52 582). Das für die Hydrolyse verwendete Wasser wird zweckmäßig im Überschuß eingesetzt. Der Überschuß sollte mindestens etwa 10 % betragen. Auch Überschüsse bis zu etwa 300 % können technisch sinnvoll sein. Höhere Überschüsse sind nicht erforderlich.

Das Verfahren wird in einfacher Weise so durchgeführt, daß man das Dichlorphosphan bei 60 bis 100 °C, vorzugsweise bei etwa 80 bis etwa 95 °C, unter Rühren in das vorgelegte Wasser eindosiert. Je nach der gewählten Temperatur und der eingesetzten Wassermenge beginnt nach einer bestimmten Zeit der im Zuge der Reaktion gebildete Chlorwasserstoff abzugasen.

Zur Vermeidung der zu Beginn der Reaktion häufig auftretenden hohen Wärmetönung (Lösungswärme des gebildeten Chlorwasserstoffs), die zu Beginn der Reaktion nur eine geringe Dosiergeschwindigkeit des Dichlorphosphans zuläßt bzw. eine Kühlung des Reaktionsgefäßes erforderlich macht, kann man anstelle des (reinen) Wassers auch konzentrierte Salzsäure in einer Menge vorlegen, die die benötigte Wassermenge für die Umsetzung gewährleistet.

Besonders günstig erwies sich dabei ein Gemisch aus konzentrierter Salzsäure und einem Teil des noch chlorwasserstoffhaltigen Reaktionsproduktes aus einem vorhergehenden Ansatz. Hierbei kann das Dichlorphosphan in gleichmäßigem Strom ohne Kühlung des Reaktionsgefäßes zudosiert werden.

Es ist möglich, das Verfahren sowohl diskontinuierlich als auch kontinuierlich durchzuführen.

In jedem Falle ist aber die Durchführung unter Inertgasatmosphäre bevorzugt, wobei als Inertgase z. B. Stickstoff, Argon und/oder Kohlendioxid in Frage kommen.

Nach Beendigung der Reaktion wird der im Reaktionsgut noch befindliche Chlorwasserstoff in üblicher Weise zusammen mit dem überschüssigen Wasser entfernt, z. B. diskontinuierlich durch Abdestillation im Vakuum oder durch Strippen mit Hilfe eines Inertgases, bzw. kontinuierlich in einer beheizten Strippkolonne bei vermindertem Druck und/oder im Gegenstrom eines Inertgases.

Die nach dem erfindungsgemäßen Verfahren anfallenden phosphonigen Säuren enthalten — wenn überhaupt — nur sehr geringe Mengen an Phosphonsäuren sowie gegebenenfalls phosphoriger Säure, was von einer geringfügigen Anoxidation der Ausgangs-Dichlorphosphane (→Phosphonsäuren) sowie einer Verunreinigung derselben durch Phosphortrichlorid (→ phosphorige Säure) herrührt.

Wegen der Vermeidung der Disproportionierung der phosphonigen Säuren durch die erfindungsgemäße Verfahrensweise stellt die Erfindung eine erhebliche Verbesserung der bekannten Hydrolyse von Dihalogenphosphanen und damit einen nicht unbeträchtlichen Fortschritt dar.

Die Erfindung wird nun durch die folgenden Beispiele näher erläutert. Die in den Erfindungsbeispielen in geringer Menge als Nebenprodukte mit erhaltenen Phosphonsäuren und phosphorige Säure stammen von einer geringfügigen Anoxidation der Ausgangs-Dichlorphosphane sowie einer geringfügigen Verunreinigung derselben mit Phosphortrichlorid. Phosphangeruch war in keinem Fall festzustellen — im Gegensatz zu dem an die Erfindungsbeispiele anschließenden Vergleichsbeispiel (Hydrolyse von Phenyldichlorphosphan unter üblichen Bedingungen, d. h. bei Temperaturen bis zu max. etwa 50 °C).

Beispiel 1

473 g 99 %iges Dichlor-methyl-phosphan werden unter Stickstoffatmosphäre und unter Rühren in 180 g Wasser während 4 Stunden bei 85-95 °C eingetropft. Zu Beginn wird dabei zunächst nur sehr langsam eingetropft. Nach 15 Min. beginnt Chlorwasserstoffentwicklung. Das Abgas während der gesamten Umsetzung ist frei von Methylphosphan. Nach Beendigung der Umsetzung wird abgekühlt. Man erhält 408 g einer Reaktionslösung mit einem Gehalt von 14 % Chlorwasserstoff. Nun wird Wasserstrahlvakuum angelegt und der Chlorwasserstoff weitgehend zusammen mit dem überschüssigen Wasser entfernt. Dabei wird die Innentemperatur allmählich bis 95 °C gesteigert. Nach sechs Stunden erhält man so 322 g methanphosphonige Säure mit einem Restgehalt von 1,5 % Chlorwasserstoff. Das Produkt ist eine leicht bewegliche, wasserhelle und geruchsfreie Flüssigkeit. Sie enthält aufgrund eines $^{31}$P-NMR-Spektrums 0,7 % Methanphosphonsäure und 0,3 % phosphorige Säure. Die Ausbeute beträgt etwa 100 % d. Th.

Beispiel 2

282 g konzentrierte Salzsäure (36 %ig), die 180 g Wasser enthalten, werden unter Stickstoffatmosphäre auf 85 °C erwärmt. Die Heizung wird entfernt und 470 g 99,7 %iges Dichlor-methyl-phosphan mit einer Geschwindigkeit von 160 g/Std. eindosiert, wobei zunächst die Reaktionstemperatur bei 85 °C gehalten werden kann. Nach ca. 30 Min. muß das Reaktionsgefäß zur Aufrechterhaltung der Reaktionstemperatur von 85° wieder beheizt werden. Nach Beendigung des Eintropfens (3 Stunden) wird abgekühlt. Das

Reaktionsgemisch, das noch 17,4 % Chlorwasserstoff und das überschüssige Wasser enthält, wird innerhalb 2 Stunden kontinuierlich durch eine auf 100 °C beheizte Strippkolonne bei 4-5 kPa und ca. 35 Liter/Stunde Stickstoff im Gegenstrom geleitet. Man erhält 321 g methanphosphonige Säure, die noch 1,1 % Chlorwasserstoff und aufgrund eines $^{31}P$-NMR-Spektrums 0,1 % Methanphosphonsäure und 0,1 % phosphorige Säure enthält. Die Ausbeute beträgt ca. 100 % d. Th.

Beispiel 3

Ein Gemisch aus 282 g konzentrierter Salzsäure und 130 g roher methanphosphoniger Säure (mit einem Gehalt von 17,4 % Chlorwasserstoff und 7 % Wasser), die aus einem vorangehenden Ansatz stammt, wird auf 85 °C erhitzt. Innerhalb von 3 Stunden werden 470 g 99,7 %iges Dichlor-methyl-phosphan gleichmäßig eingetropft, wobei das Reaktionsgefäß von Beginn an im Heizbad verbleibt.

Nach Aufarbeitung wie unter Beispiel 2 beschrieben, erhält man 419 g methanphosphonige Säure, die noch 1 % Chlorwasserstoff und aufgrund eines $^{31}P$-NMR-Spektrums 0,1 % Methanphosphonsäure und 0,15 % phosphorige Säure enthält. Unter Berücksichtigung der vorgelegten Menge ist die Ausbeute ca. 100 % d. Th.

Beispiel 4

300 g Dichlor-ethyl-phosphan werden unter Stickstoffatmosphäre und unter Rühren in 103 g Wasser während 2,5 Stunden bei 90 °C eingetropft. Nach 30 Minuten beginnt Chlorwasserstoffentwicklung. Das Abgas während der gesamten Umsetzung ist frei von Ethylphosphan. Nach Beendigung der Umsetzung wird gekühlt. Die anfallende Reaktionslösung enthält noch 13,8 % Chlorwasserstoff. Die weitere Aufarbeitung erfolgt wie in Beispiel 1. Man erhält 215 g ethanphosphonige Säure mit einem Restgehalt von 0,7 % Chlorwasserstoff. Das Produkt ist eine wasserhelle und geruchsfreie Flüssigkeit. Sie enthält aufgrund eines $^{31}P$-NMR-Spektrums 0,8 % Ethanphosphonsäure, 0,5 % phosphorige Säure und 0,3 % Phosphorsäure. Die Ausbeute beträgt etwa 100 % d. Th.

Beispiel 5

360 g Dichlor-phenyl-phosphan werden unter Stickstoffatmosphäre und unter Rühren in 180 g Wasser während 2,5 Stunden bei 95 °C eingetropft. Nach etwa 30 Minuten beginnt Chlorwasserstoffentwicklung. 1 Stunde wird bei 90 °C nachgerührt. Dann wird abgekühlt. Die wässrige Reaktionslösung enthält noch 11,9 % Chlorwasserstoff. Im Wasserstrahlvakuum wird der Chlorwasserstoff zusammen mit dem überschüssigen Wasser bis zu einer Innentemperatur von 80-100 °C entfernt. Man erhält 280 g benzolphosphonige Säure mit einem Gehalt von 0,8 % Benzolphosphonsäure ($^{31}P$-NMR-Spektrum). Die Ausbeute beträgt etwa 98,5 % d. Th.

Vergleichsbeispiel

360 g Dichlor-phenyl-phosphan werden unter Stickstoffatmosphäre ohne Erwärmen und unter Rühren in 180 g Wasser während 2,5 Stunden eingetropft. Nach kurzer Zeit tritt Phosphangeruch auf. Die Temperatur steigt zu Beginn an auf maximal 50 °C. Dann beginnt die Chlorwasserstoffentwicklung und die Temperatur fällt. Die anfallende wässrige Reaktionslösung enthält noch 14,9 % Chlorwasserstoff. Die Aufarbeitung wird wie in Beispiel 3 durchgeführt. Man erhält 280 g benzolphosphonige Säure mit einem Gehalt von 2,2 % Benzolphosphonsäure ($^{31}P$-NMR-Spektrum). Der Phosphangeruch, sowie der — gegenüber dem hiermit zu vergleichenden Erfindungsbeispiel 5 — um 1,4 % höhere Phosphonsäuregehalt zeigen, daß hier eine wirkliche Disproportionierung der benzolphosphonigen Säure stattgefunden hat.

Als derselbe Ansatz mit Kühlung durchgeführt wurde, entwickelten sich so große Mengen an Phenylphosphan, die mit dem Stickstoffstrom aus der Apparatur getrieben wurden, daß die Umsetzung vorzeitig abgebrochen wurde.

**Ansprüche**

1. Verfahren zur Herstellung phosphoniger Säuren durch Hydrolyse von Dichlorphosphanen mit Wasser, dadurch gekennzeichnet, daß man Dichlorphosphane der Formel

$$R—PCl_2,$$

in welcher R $C_1$-$C_{18}$-, insbesondere $C_1$-$C_4$-Alkyl, $C_7$-$C_{12}$-Aralkyl, insbesondere Benzyl, oder $C_6$-$C_{10}$-Aryl, insbesondere Phenyl bedeutet, bei Temperaturen von 60 bis 100 °C, vorzugsweise von 80 bis 95 °C, hydrolysiert.

2. Verfahren nach Anspruch 1, dadurch gekennzeichnet, daß man nach beendeter Hydrolyse den gebildeten und im Reaktionsgut noch vorhandenen Chlorwasserstoff entfernt.

## Claims

1. A process for the preparation of phosphonous acids by hydrolysis of dichlorophosphanes with water, characterized in hydrolysing dichlorophosphanes of the formula

$$R—PCl_2$$

in which R means $C_1$-$C_{18}$-alkyl, especially $C_1$-$C_4$-alkyl, $C_7$-$C_{12}$-aralkyl, especially benzyl, or $C_6$-$C_{10}$-aryl, especially phenyl, at temperatures of 60 to 100 °C, preferably of 80 to 95 °C.

2. The process as claimed in claim 1, characterized in removing — after the hydrolysis has ended — the hydrogen chloride formed and still present in the reaction mixture.

## Revendications

1. Procédé de préparation d'acides phosphoneux par hydrolyse de dichlorophosphanes par de l'eau, procédé caractérisé en ce qu'on hydrolyse des dichlorophosphanes de formule :

$$R—PCl_2$$

dans laquelle R représente un groupe alkyle en $C_1$-$C_{18}$, notamment en $C_1$-$C_4$, un groupe aralkyle en $C_7$-$C_{12}$, notamment benzyle, ou un groupe aryle en $C_6$-$C_{10}$, notamment phényle, à des températures de 60 à 100 °C, avantageusement de 80 à 95 °C.

2. Procédé selon la revendication 1, caractérisé en ce que, après achèvement de l'hydrolyse, on chasse le chlorure d'hydrogène (acide chlorhydrique) formé et encore présent dans le mélange réactionnel.